# EUROPÄISCHE PATENTSCHRIFT

(11) **EP 2 508 106 B1**
(45) Veröffentlichungstag und Bekanntmachung des Hinweises auf die Patenterteilung: **21.12.2016**
(21) Anmeldenummer: 12161799.7
(22) Anmeldetag: 28.03.2012
(51) Int. Cl.: A47F 5/08, E04F 13/08, E04F 19/06, F16B 5/06

(54) **Trag- und Montageprofilen zur Fixierung von Paneelen in einem Ladenbausystem**
Supporting and installation profiles for fixing panels in a shop fitting system
Profils de soutien et d'installation pour la fixation de panneaux dans un système de présentoirs

(30) Priorität: 07.04.2011 DE 202011004967 U
(43) Veröffentlichungstag der Anmeldung: 10.10.2012
(73) Patentinhaber: Serafini Besitz Gmbh & Co. Kg, 58636 Iserlohn (DE)
(72) Erfinder: Pielsticker, Roland, 58638 Iserlohn (DE)
(74) Vertreter: Meinke, Dabringhaus und Partner GbR

(56) Entgegenhaltungen:
- WO-A1-01/38668
- AT-U1- 11 318
- JP-A- 3 208 952

## Beschreibung

Die Erfindung richtet sich auf einen Trag- und Montageprofil zur Fixie rung von Paneelen, Wandtafeln, rahmengefassten Spiegeln od. dgl. in einem Ladenbausystem, wobei horizontal verlaufende Trag- und Montageprofile zur Aufnahme der entsprechenden Paneele dienen.

Ladenbausysteme verfügen in der Regel über Tragstrukturen, u.a. mit horizontalen und/oder vertikalen Trag- und Montageprofilen, die der Aufnahme von Paneelen, Wandtafeln, Konfektionsrahmen, Aufhängearmen, Spiegeln und Beleuchtungselementen u. dgl. dienen.

Es ist dabei bekannt, die zwischen den Tragprofilen liegenden Freiräume durch Rückwandverkleidungen, wie Wandtafeln, Paneelen od. dgl. , zu gestalten, wie es beispielsweise in dem DE 20 2008 002 533 U1 der Anmelderin oder z.B. der WO 01/38668 A1 beschrieben ist.

Um eine möglichst hohe Variabilität der Wandgestaltung sowohl in der Farbgebung als auch in den Materialien zu ermöglichen, sollten diese Elemente möglichst leicht austauschbar sein, dies ist das Ziel der vorliegenden Erfindung.

Um dieses Ziel zu erreichen, sieht die Erfindung vor, dass die horizontalen Profile mit einer die Oberkante des Paneels sichernden Rastlippe ausgerüstet ist und der die untere Randkante des Paneels aufnehmende Profilbereich eine Stützfläche sowie eine in der Gebrauchslage hinter dem Paneel liegende Rastnut für an der Paneelrückseite vorgesehene Fixierclipse aufweist.

Durch das Versehen der entsprechenden Paneele mit Montageclipsen im Bereich ihres in der Gebrauchslage unteren Randes und der entsprechenden Verrastmöglichkeit in den Horizontalprofilen ist eine derartige einfache Austauschbarkeit gewährleistet.

Durch die erfindungsgemäße Clips-/Rastverbindung im Zusammenspiel mit Clipselementen an den Paneelen und den entsprechenden Rastmöglichkeiten in den Profilen ist es möglich, diese Flächenfüllungen zwischen den Tragprofilen in vielfacher Hinsicht auszugestalten. Sie können in ihrer Materialstärke variieren, in ihrer Materialart, sie können als einrastbare Leucht- und Informationstafeln ausgestaltet sein u. dgl. mehr.

Ausgestaltungen der Erfindung ergeben sich aus den Unteransprüchen. Dabei kann vorgesehen sein, dass der die Oberkante fixierende Profilsteg eine in der Gebrauchslage in eine Nut in der Oberkante der Paneele eingreifende Rastlippe aufweist. Durch die Rastlippe an dem die Oberkante fixierenden Profilsteg wird das entsprechende eingesetzte Element, das mit der korrespondierenden Nut versehen ist, im oberen Randbereich fest und sicher gehalten.

Die Erfindung sieht auch vor, dass die untere Stützfläche in eine Auflauffläche, die mit der Rastnut versehen ist, übergeht. Dadurch, dass die Rastnut im Bereich der unteren Stützfläche unmittelbar vom Horizontalprofil bereitgestellt wird, bedarf es keiner weiteren Fixierelemente, etwa an einer Wand, vor der der entsprechende Bausatz aufgebaut wird, oder einer Fixierung an den Vertikalstreben.

Eine Ausgestaltung dieser Auflauffläche besteht darin, dass die Auflauffläche in ihrem in die Stützfläche übergehenden Bereich als Anschlagfläche ausgebildet ist.

Die zum Bausatz gehörenden Fixierclipse zeichnen sich dadurch aus, dass sie querschnittlich etwa L-förmig ausgebildet sind, wobei der jeweilige L-Schenkel an seinem freien Ende mit einer Rastwulst zum Eingreifen in die Rastnut am Profil versehen ist und die dem zu fixierenden Paneel zugewandte Fläche des L-Steges mit einem in Richtung auf das Paneel weisenden Ansatz versehen ist, der in der Gebrauchslage in eine in der Paneelrückseite vorgesehene Nut klemmend eingreift. Diese Clipsgestaltung macht eine Vorfertigung der jeweiligen Füllung bzw. Paneele in einer Werkstatt möglich mit einer planen Lagerung der entsprechenden Paneele beim Transport. Die Montage der jeweiligen Clipse kann je nach erforderlicher Traglast in der Menge variabel sein und auf der Baustelle ohne besondere Lehren oder Werkzeuge montiert werden.

Nach der Erfindung kann auch vorgesehen sein, dass der L-Schenkel zur Gewährleistung einer Federkraft eine geringere Wandstärke als der L-Steg aufweist und zu diesem in einem Winkel größer 90°, insbesondere 110°, angeordnet ist.

Eine einfache und kostengünstige Möglichkeit, derartige Clipse zu fertigen, besteht darin, diese als Kunststoffelemente auszubilden, wie dies die Erfindung ebenfalls vorsieht.

An dieser Stelle sei bemerkt, dass die Horizontalprofile selbstverständlich auch in äquivalenter Weise vertikal einbaubar sein können mit der entsprechenden Anordnung der Eingriffsprofile und der Klemmprofile für die Clipse in den entsprechend zugeordneten Vertikalseiten der Flächenelemente.

Weitere Merkmale, Einzelheiten und Vorteile der Erfindung ergeben sich aufgrund der nachfolgenden Beschreibung sowie anhand der Zeichnung. Diese zeigt in
- Fig. 1: eine Seitenansicht einer mit Vertikalprofilen versehenen Wand sowie im mittleren Bereich ein Paneel in unterschiedlichen Einrastpositionen,
- Fig. 2: in vergrößerter Darstellung einen Bereich "A" in Fig. 1,
- Fig. 3: eine vergrößerte Teilansicht gemäß Darstellungskreis "B" in Fig. 1,
- Fig. 4: eine räumliche Darstellung eines erfindungsgemäßen Bausatzprofiles,
- Fig. 5: den Einzelquerschnitt dieses Profiles,
- Fig. 6: eine räumliche Darstellung eines Rastclipses sowie in
- Fig. 7: die Seitenansicht eines Rastclipses nach Fig. 6.

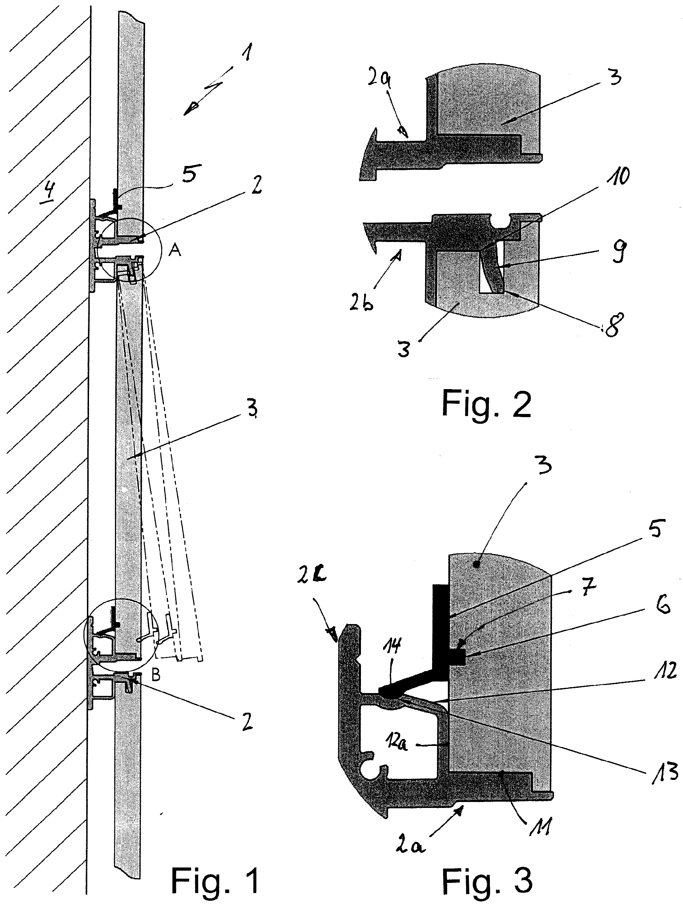

Ein allgemein mit 1 bezeichnete Bausatz eines Ladenbausystemes besteht im dargestellten Beispiel aus mit 2 bezeichneten Horizontalprofilen, evtl. vorgesehene Vertikalprofile sind nicht näher dargestellt, und eine als Paneel 3 angedeutete Füllung, um die hinter dem Bausatz 1 positionierte Gebäudewand 4 zu bedecken, die hier als Gesamtträger dient. Statt der Wand können auch andere Tragelemente vorgesehen sein, um etwa Raumteiler entsprechend zu gestalten. Das Horizontalprofil 2 weist einen der Unterseite des Paneels 3 zugeordneten Abschnitt des Horizontalprofiles, in Fig. 3 allgemein mit 2a bezeichnet, einen der Oberseite zugeordneten Abschnitt 2b und vertikale Profilschenkel 2c auf.

Zu dem Bausatz gehört in gleicher Weise eine Mehrzahl von Fixierclipsen 5, die in einer Nut 6 an der der Wand 4 zugewandten Seite des Paneels 3 klemmend mittels eines Ansatzes 7 befestigt sind. Die Paneele 3 weisen auf ihrer oberen Randkante ebenfalls eine Eingriffsnut 8 auf, wobei das Horizontalprofil 2 in seinem dieser oberen Kante zugeordneten Profilbereich eine Rastlippe 9 aufweist, welche in die mit 10 bezeichnete Nut in dem Paneel 3 eingreift.

Der Horizontalabschnitt 2a bildet eine Stützfläche 11 für das Paneel 3. Diese Stützfläche 11 geht in eine Auflauffläche 12, die gleichzeitig eine Anlagefläche 12a für das Paneel 3 bildet, über und mündet in dem vertikalen Profilschenkel 2c des Stützprofiles 2.

Die Auflauffläche 12 ist mit einer Rastnut 13 ausgerüstet, in die sich in der Endmontagelage eine mit 14 bezeichnete Rastwulst einlegt, die das freie Ende des Steges 5a des querschnittlich L-förmigen Clipses 5 einlegt, während der L-Steg 5b, wie oben schon angedeutet, mit dem Ansatz 7 zum klemmenden Einsatz in eine Nut in der Rückseite des Paneels 3 versehen ist.

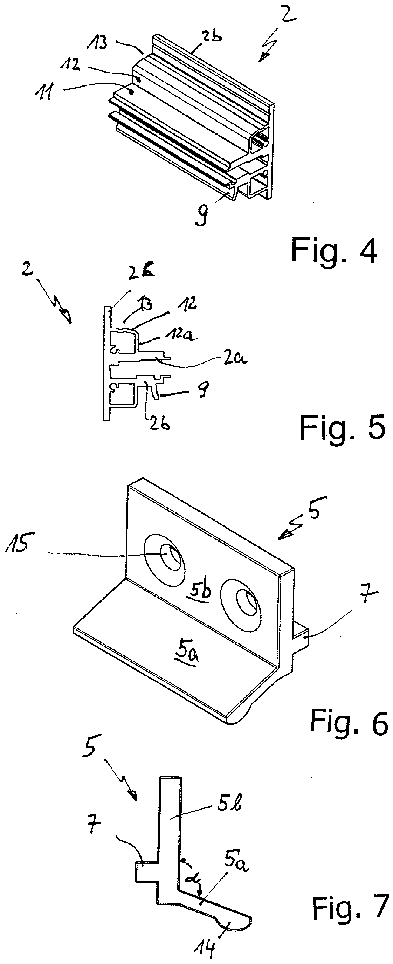

Wie sich aus Fig. 6 ebenfalls ergibt, können die Clipse nach Einnahme ihrer endgültigen Montagelage vor Ort über Verschraubungen befestigt werden. Hierzu sind entsprechende Durchgangsbohrungen 15 vorgesehen.

Wie sich insbesondere aus Fig. 7 ergibt, ist der L-Schenkel 5a etwas dünner gestaltet als der L-Steg 5b und weist einen Innenwinkel a von etwa 110° auf, ohne dass diese Erfindung auf diese Gradzahl beschränkt wäre.

Natürlich ist das beschriebene Ausführungsbeispiel noch in vielfacher Hinsicht abzuändern, ohne den Grundgedanken zu verlassen. So ist die Erfindung nicht auf ein bestimmtes Material und auch nicht auf die hier dargestellte spezielle Querschnittsform beschränkt.

### Bezugszeichenliste:

- 1: Bausatz
- 2: Horizontalprofil
- 3: Paneel
- 4: Gebäudewand
- 5: Fixierclips
- 5a: L-Schenkel
- 5b: L-Steg
- 6: Nut
- 7: Ansatz
- 8: Eingriffsnut
- 9: Rastlippe
- 10: Nut
- 11: Stützfläche
- 12: Auflauffläche
- 12a: Anlagefläche
- 13: Rastnut
- 14: Rastwulst
- 15: Durchgangsbohrung

## Patentansprüche

1. Trag- und Montageprofil (2) zur Fixierung von Paneelen (3), Wandtafeln, rahmengefassten Spiegeln od. dgl. in einem Ladenbausystem
, wobei horizontal verlaufende Trag- und Montageprofile zur Aufnahme der entsprechenden Paneele dienen,
**dadurch gekennzeichnet,**
**dass** die horizontalen Profile (2) mit einer die Oberkante des Paneels (3) sichernden Rastlippe (9) ausgerüstet sind und der die untere Randkante des Paneels aufnehmende Profilbereich eine Stützfläche (11) sowie eine in der Gebrauchslage hinter dem Paneel liegende Rastnut (13) für an der Paneelrückseite vorgesehene Fixierclipse (5) aufweist.

2. Trag- und Montageprofil nach Anspruch 1,
**dadurch gekennzeichnet,**
**dass** der die Oberkante fixierende Profilsteg (2b) eine in der Gebrauchslage in eine Nut (8) in der Oberkante der Paneele (3) eingreifende Rastlippe aufweist.

3. Trag- und Montageprofil nach Anspruch 1 oder 2,
**dadurch gekennzeichnet,**
**dass** die untere Stützfläche (11) in eine Auflauffläche (12), die mit der Rastnut (13) versehen ist, übergeht.

4. Trag- und Montageprofil nach Anspruch 3,
**dadurch gekennzeichnet,**
**dass** die Auflauffläche (12) in ihrem in die Stützfläche (11) übergehenden Bereich als Anschlagfläche (12a) ausgebildet ist.

5. Trag- und Montageprofil nach einem der vorangehenden Ansprüche,
**dadurch gekennzeichnet,**
**dass** der Fixierclips (5) querschnittlich etwa L-förmig ausgebildet ist, wobei der L-Schenkel (5a) an seinem freien Ende mit einer Rastwulst (14) zum Eingreifen in die Rastnut (13) am Profil (2) versehen ist und die dem zu fixierenden Paneel (3) zugewandte Fläche des L-Steges (5b) mit einem in Richtung auf das Paneel weisenden Ansatz (7) versehen ist, der in der Gebrauchslage in eine in der Paneelrückseite vorgesehene Nut (6) klemmend eingreift.

6. Trag- und Montageprofil nach einem der vorangehenden Ansprüche,
**dadurch gekennzeichnet,**
**dass** der L-Schenkel (5a) zur Gewährleistung einer Federkraft eine geringere Wandstärke als der L-Steg (5b) aufweist und zu diesem in einem Winkel (a) größer 90°, insbesondere 110°, angeordnet ist.

7. Trag- und Montageprofil nach einem der vorangehenden Ansprüche,
**dadurch gekennzeichnet,**
**dass** der Fixierclips (5) als Kunststoffelement ausgebildet ist.

## Claims

1. Support and mounting profile (2) for fixing panels (3), wall panels, frame-mounted mirrors or similar items in a shop fitting system, wherein horizontal support and mounting profiles are used to accommodate the appropriate panels,
**characterised in that**
the horizontal profiles (2) are equipped with a locking lip (9) securing the upper edge of the panel (3) and **in that** the profile area accommodating the lower edge of the panel has a support surface (11) and a locking groove (13) situated behind the panel in the operating position for fixing clips (5) provided on the back of the panel.

2. Support and mounting profile according to claim 1,
**characterised in that**
the profile crosspiece (2b) fixing the upper edge has a locking lip engaging in a groove (8) in the upper edge of the panels (3) in the operating position.

3. Support and mounting profile according to claim 1 or 2,
**characterised in that**
the lower support surface (11) transitions into a run-up surface (12) which is provided with the locking groove (13).

4. Support and mounting profile according to claim 3,
**characterised in that**
the run-up surface (12) is designed as a stop surface (12a) in its area transitioning into the support surface (11).

5. Support and mounting profile according to any one of the preceding claims, **characterised in that** the fixing clip (5) is designed to have an approximately L-shaped cross-section, wherein the L-leg (5a) is provided with a locking bead (14) at its free end for engaging in the locking groove (13) on the profile (2) and the surface of the L-bar (5b) facing the panel (3) to be fixed is provided with an attachment (7) pointing in the direction of the panel which engages by clamping into a groove (6) provided in the back of the panel in the operating position.

6. Support and mounting profile according to one of the preceding claims,
**characterised in that**
the L-leg (5a) has a lower wall thickness than the L-crosspiece (5b) in order to ensure a spring force and is arranged at an angle (α) greater than 90°, in particular of 110°, to the L-crosspiece.

7. Support and mounting profile according to one of the preceding claims,
**characterised in that**
the fixing clip (5) is designed as a plastic element.

## Revendications

1. Profilé de support et de montage (2) pour la fixation de panneaux (3), tableaux muraux, miroirs encadrés ou équivalents dans un système d'aménagement de magasins, des profilés de support et de montage qui s'étendent horizontalement servant à recevoir les panneaux correspondants,
**caractérisé en ce que** les profilés horizontaux (2) sont équipés d'une lèvre d'enclenchement (9) bloquant le bord supérieur du panneau (3) et la zone de profilé recevant le bord inférieur du panneau comporte une surface d'appui (11) ainsi qu'une rainure d'enclenchement (13) qui se trouve derrière le panneau à l'état monté et qui est destinée à des clips de fixation (5) prévus sur l'arrière du panneau.

2. Profilé de support et de montage selon la revendication 1, **caractérisé en ce que** la traverse de profilé (2b) fixant le bord supérieur comporte une lèvre d'enclenchement pénétrant à l'état monté dans une rainure (8) dans le bord supérieur des panneaux (3).

3. Profilé de support et de montage selon la revendication 1 ou 2, **caractérisé en ce que** la surface d'appui inférieure (11) se transforme en une surface d'introduction (12) qui est munie de la rainure d'enclenchement (13).

4. Profilé de support et de montage selon la revendication 3, **caractérisé en ce que** la surface d'introduction (12) est conçue comme une surface de butée (12a) dans sa zone se transformant en surface d'appui (11).

5. Profilé de support et de montage selon l'une des revendications précédentes, **caractérisé en ce que** le clip de fixation (5) est conçu avec une section transversale sensiblement en forme de L, le montant de L (5a) étant muni à son extrémité libre d'un bourrelet d'enclenchement (14) pour pénétrer dans la rainure d'enclenchement (13) sur le profilé (2) et la surface, proche du panneau (3) à fixer, de la traverse de L (5b) étant munie d'un appendice (7) qui pointe en direction du panneau et qui pénètre avec un effet bloquant dans une rainure (6) prévue à l'arrière du panneau à l'état monté.

6. Profilé de support et de montage selon l'une des revendications précédentes, **caractérisé en ce que**, pour garantir une certaine force de ressort, le montant de L (5a) présente une plus petite épaisseur que la traverse de L (5b) et est agencé avec un angle (α) supérieur à 90°, notamment de 110°, par rapport à ladite traverse de L.

7. Profilé de support et de montage selon l'une des revendications précédentes, **caractérisé en ce que** le clip de fixation (5) est conçu comme un élément en plastique.
